# EUROPÄISCHE PATENTSCHRIFT

(11) **EP 1 319 440 B1**
(45) Veröffentlichungstag und Bekanntmachung des Hinweises auf die Patenterteilung: **06.05.2009**
(21) Anmeldenummer: 01129645.6
(22) Anmeldetag: 12.12.2001
(51) Int. Cl.: B05B 7/00, B05B 12/08, F01N 3/20

(54) **Vorrichtung und Verfahren zum Zerstäuben einer Flüssigkeit in ein Volumen**
Method and apparatus for spraying a liquid in a space
Méthode et appareil de pulvérisation d'un liquide dans un volume

(43) Veröffentlichungstag der Anmeldung: 18.06.2003
(73) Patentinhaber: Argillon GmbH, 96257 Redwitz (DE)
(72) Erfinder: Grubert, Andreas, 96231 Staffelstein (DE); Hofmann, Lothar, 96264 Altenkunstadt (DE); Müller, Raimund, Dr., 96103 Doerfleins (DE); Rusch, Klaus, 96123 Litzendorf (DE)
(74) Vertreter: Tergau & Pohl Patentanwälte

(56) Entgegenhaltungen:
- DE-A- 4 128 670
- DE-A- 10 002 414

## Beschreibung

Die Erfindung betrifft eine Vorrichtung und ein Verfahren zum Zerstäuben einer Reduktionsmittellösung in eine Abgasleitung einer Verbrennungsanlage, besonders eines Kraftfahrzeugs.

Auf vielen technischen Gebieten ist es gewünscht und erforderlich, Flüssigkeiten, Lösungen oder Gas-Flüssigkeitsgemische möglichst fein zu zerstäuben und in ein Volumen einzubringen. Zur Zerstäubung stehen prinzipiell unterschiedliche Arten von Düsen zur Verfügung. Die Zerstäubung kann dabei mit Hilfe eines Trägergases wie in der DE 100 02 414 beschrieben oder unmittelbar durch eine geeignete Druckerzeugung in der Flüssigkeit erfolgen. Bei der letztgenannten Variante muss ein sehr hoher Flüssigkeitsdruck ausgebildet werden, um die gewünschte Zerstäubung zu erreichen. Derartige Düsen werden beispielsweise als Einspritzdüsen in der Kraftfahrzeugtechnik verwendet.

Bei einem so genannten Venturi-Zerstäuber wird im engsten Querschnitt einer von dem Trägergas durchströmten Venturi-Düse die Flüssigkeit eingebracht. Weiterhin sind so genannte Zweistoffdüsen bekannt, die mit Trägergas-Unterstützung betrieben werden. Als Zweistoffdüsen werden allgemein derartige Düsen bezeichnet, bei der zwei unterschiedliche Stoffe innerhalb der Düse miteinander vermischt und dann zerstäubt werden. Beispielhaft ist hier die innenmischende Zweistoffdüse zu nennen, bei der die Flüssigkeit und das Trägergas vor dem Passieren des engsten Querschnitts der Düse vermischt werden. Hierzu wird beispielsweise die Flüssigkeit in einem zentralen Kanal der Düse zugeführt und das Trägergas wird unter einem Winkel zu der Strömungsrichtung der Flüssigkeit ringförmig um diesen zentralen Kanal eingeleitet, so dass sich das Trägergas mit der Flüssigkeit vermischt. Sowohl bei dem Venturi-Zerstäuber als auch bei der Zweistoffdüse ist nachteiligerweise der notwendige Trägergasstrom von dem eingebrachten Flüssigkeits-Massenstrom abhängig. Dies führt beim Venturi-Zerstäuber dazu, dass ein sehr hoher Trägergas-Massenstrom vorgesehen sein muss, auf den die Venturi-Düse abgestimmt ist, um eine gewisse Unabhängigkeit von dem zu zerstäubenden Flüssigkeits-Massenstrom zu gewährleisten. Bei sehr kleinen Düsen besteht zudem die Gefahr, dass aufgrund der Einspeisung der Flüssigkeit im engsten Querschnitt dieser quasi verstopft. Bei der Zweistoffdüse besteht weiterhin die Gefahr, dass die eingeleitet Flüssigkeit in die Leitung für das Trägergas zurückströmen kann.

Alle Zerstäuberdüsen weisen den Nachteil auf, dass die zu zerstäubende Flüssigkeit unmittelbar im Bereich der Düsenöffnung der Düse zugeführt werden muss. Wird die Düse unter extremen Bedingungen, insbesondere im Bereich von hohen oder sehr niedrigen Temperaturen eingesetzt, so kann dies dazu führen, dass sich die Viskosität der Flüssigkeit in nachteiliger Weise stark verändert oder es kann zu unerwünschten Zersetzungs- oder Verdampfungsreaktionen kommen.

Ein typisches Einsatzgebiet einer Zerstäuberdüse ist im Bereich der Abgasreinigung, insbesondere im Bereich der Abgasreinigung von Verbrennungsmotoren. So ist beispielsweise aus der WO 99/55445 ein Verfahren und eine Vorrichtung zur katalytischen Reduzierung von Stickoxiden im Abgas einer Verbrennungsanlage zu entnehmen. Bei dem beschriebenen Verfahren wird ein Katalysator zur katalytischen Umwandlung der im Abgas enthaltenen Stickoxide in unbedenkliche Stoffe eingesetzt. Die Stickoxide werden dabei nach dem Verfahren der selektiven katalytischen Reduktion (SCR-Verfahren) aus dem Abgas entfernt. Dabei wird in das Abgas vor dem Durchströmen eines so genannten SCR- oder DeNOx-Katalysator ein Reduktionsmittel eingebracht, das die im Abgas enthaltenen Stickoxide in Anwesenheit von Sauerstoff am Katalysator zu unschädlichem Stickstoff und Wasser umsetzt. Als Reduktionsmittel wird in der Regel Ammoniak oder Harnstoff verwendet, das üblicherweise in Form einer Reduktionsmittellösung in das Abgas eingebracht wird. Dabei wird die Reduktionsmittellösung unmittelbar in die Abgasleitung des Kraftfahrzeugs eingedüst.

Da die anfallende Menge der Stickoxide im Abgas aufgrund der häufigen Lastwechsel bei einem Kraftfahrzeug-Motor starken Schwankungen unterworfen ist, muss die eingedüste Reduktionsmittellösung an diesen Schwankungen angepasst werden, um einerseits eine möglichst optimale Funktion des Katalysators sicherzustellen und gleichzeitig den unerwünschten Austritt von Ammoniak an die Umwelt sicher zu vermeiden. Der Volumendurchsatz der eingedüsten Reduktionsmittellösung variiert daher sehr stark. Zudem erfolgt die Eindüsung unmittelbar an der Abgasleitung, so dass die Gefahr von Zersetzungs- und Verdampfungsreaktionen im Bereich der Düse besteht.

Der Erfindung liegt die Aufgabe zugrunde, eine zuverlässige Zerstäubung einer Flüssigkeit in ein Volumen zu ermöglichen.

Die Aufgabe wird erfindungsgemäß gelöst durch eine Vorrichtung zum Zerstäuben einer Reduktionsmittellösung in eine Abgasleitung eines Kraftfahrzeugs. Hierbei ist ein von einem Trägergas in Strömungsrichtung durchströmbarer Strömungskanal vorgesehen, der eine Düse mit einem Halsabschnitt mit minimalem Strömungsquerschnitt zur Beschleunigung des Trägergases aufweist. In Strömungsrichtung nach dem Halsabschnitt mündet eine Zuleitung für die Reduktionsmittellösung in den Strömungskanal und am Austrittsende des Strömungskanals ist eine Zerstäubereinrichtung für das Gemisch aus Reduktionsmittellösung und Trägergas vorgesehen.

Als Düse wird dabei vorzugsweise eine so genannte Lavaldüse vorgesehen, wobei die entsprechenden Parameter des Trägergases derart gewählt werden, dass im Halsabschnitt Schallgeschwindigkeit erreicht wird. Dieser Ausgestaltung liegt die prinzipielle Idee zugrunde, durch Zuleitung der Reduktionsmittellösung erst im Anschluss an den Bereich, in dem das Trägergas auf zumindest Schallgeschwindigkeit beschleunigt wurde, die Reduktionsmittellösung zuzuleiten und somit den Trägergasstrom vom Reduktionsmittellösungsstrom zu entkoppeln. Denn das Zuleiten der Reduktionsmittellösung hat bei dieser Ausgestaltung keine Rückwirkung auf die Trägergasströmung. Die kritische Strömung des Trägergases ist also unabhängig von der Menge der zugeleiteten Reduktionsmittellösung. Unter kritische bzw. überkritische Strömung des Trägergases wird dabei die Strömung des Trägergases mit Schallgeschwindigkeit bzw. mit Überschallgeschwindigkeit verstanden. Zudem ist mit der Zuleitung der Reduktionsmittellösung nach dem Halsabschnitt ein Rückströmen der Reduktionsmittellösung in den Strömungskanal ausgeschlossen. Es ist damit sicher verhindert, dass Lösungsbestandteile der Reduktionsmittellösung in den rückwärtigen Strömungskanal gelangen und dort separieren.

Ein weiterer wesentlicher Vorteil ist darin zu sehen, dass die Zuleitung der Reduktionsmittellösung von der Zerstäubereinrichtung, insbesondere Zerstäuberdüse, entkoppelt ist. Bei der Anordnung der Zerstäubereinrichtung an einer Abgasleitung besteht somit die Möglichkeit, den negativen Temperatureinfluss durch das heiße Abgas auf die Reduktionsmittellösung zu reduzieren oder zu verhindern.

In einer zweckdienlichen Weiterbildung ist vorgesehen, dass die Zuleitung in Strömungsrichtung nach dem Diffusor der Lavaldüse in den Strömungskanal mündet. Bei geeigneter Wahl der Parameter des Trägergases erreicht dieses im Halsabschnitt Schallgeschwindigkeit und entspannt sich im nachgeschalteten Diffusor weiter und erreicht dort Überschallgeschwindigkeit. Der Strömungskanal wird dann im Anschluss an den Diffusor weitergeführt und weist typischerweise die gleiche Querschnittsfläche wie das in Strömungsrichtung gelegene Ende des Diffusors auf. Bei einer derartigen Ausgestaltung erfolgt an einer bestimmten Stelle im Strömungskanal nach dem Halsabschnitt ein so genannter Verdichtungsstoß. An dieser Stelle, die mathematisch eine Singularität darstellt, geht die Strömung des Trägergases in einen unterkritischen Zustand über, und strömt mit Unterschallgeschwindigkeit weiter. Die Anordnung der Zuleitung ist gemäß dieser bevorzugten Ausgestaltung also derart gewählt, dass sie in Strömungsrichtung im Anschluss an diesen Verdichtungsstoß erfolgt. Bei dieser Ausführungsvariante ist eine besonders sichere Entkopplung zwischen dem Trägergasstrom und der eingebrachten Flüssigkeit mit den hiermit verbundenen Vorteilen erzielt.

Gemäß einer bevorzugten Weiterbildung ist die Mündungsstelle der Zuleitung in den Strömungskanal von der Zerstäubereinrichtung beabstandet. Zwischen dieser Mündungsstellung und der Zerstäubereinrichtung ist also ein Kanalabschnitt des Strömungskanals angeordnet. Hierdurch wird der Effekt des Temperatureinflusses auf die Reduktionsmittellösung minimiert oder gar ausgeschlossen.

Für eine besonders einfache Ausgestaltung der Zerstäubereinrichtung ist diese als eine sogenannte Einstoffdüse ausgebildet, die im einfachsten Fall als eine Verengung des Strömungskanals ausgestaltet ist. Bei einer Einstoffdüse wird im Unterschied zu einer Zweistoffdüse für die Zerstäubung kein zweites Medium verwendet. Da an der Einstoffdüse ein Gemisch aus der Reduktionsmittellösung und dem Trägergas vorliegt, ist der notwendige Druck, der im Gemisch herrschen muss, gering im Vergleich zu der direkten Zerstäubung einer Reduktionsmittellösung, wie sie beispielsweise bei Einspritzdüsen vorgenommen wird.

Weitere bevorzugte Ausbildungen der Vorrichtung sind in den Unteransprüchen niedergelegt. Insbesondere ist die Vorrichtung dabei derart ausgebildet, dass gewährleistet ist, dass zum einen das Trägergas in der Düse zumindest Schallgeschwindigkeit erreicht, und dass zum anderen eine exakt vorbestimmte Menge der Reduktionsmittellösung in die Abgasleitung eingedüst wird. Gemäß den Unteransprüchen ist hierzu allgemein eine Überwachung von vorzugsweise mehreren Strömungswerten sowohl des Trägergases und der Reduktionsmittellösung sowie gegebenenfalls des Gemisches vorgesehen. Diese Strömungswerte sind typischerweise die Temperatur, der Druck oder die Durchflussmenge. Die Messung dieser Strömungswerte dient einerseits zur Überwachung. Andererseits werden die Strömungswerte zugleich für die Steuerung des Massenstroms der Reduktionsmittellösung und/oder des Trägergases herangezogen. Für einen besonders sicheren Betrieb der Vorrichtung wird dabei vorzugsweise zumindest ein Regelkreis zur Regelung des Massenstroms der Reduktionsmittellösung und/oder des Trägergases vorgesehen.

Die Aufgabe wird erfindungsgemäß weiterhin gelöst durch ein Verfahren zum Zerstäuben einer Reduktionsmittellösung in eine Abgasleitung, bei dem die Geschwindigkeit eines Trägergases in einen Strömungskanal zunächst auf zumindest Schallgeschwindigkeit erhöht wird und bei dem anschließend die Reduktionsmittellösung dem Trägergas zur Ausbildung eines Gemisches zugeführt wird, welches in der Abgasleitung zerstäubt wird.

Die im Hinblick auf die Vorrichtung angeführten Vorteile und bevorzugten Ausgestaltungen sind sinngemäß auch auf das Verfahren zu übertragen. Weitere bevorzugte Ausgestaltungen des Verfahrens sind in den Unteransprüchen niedergelegt.

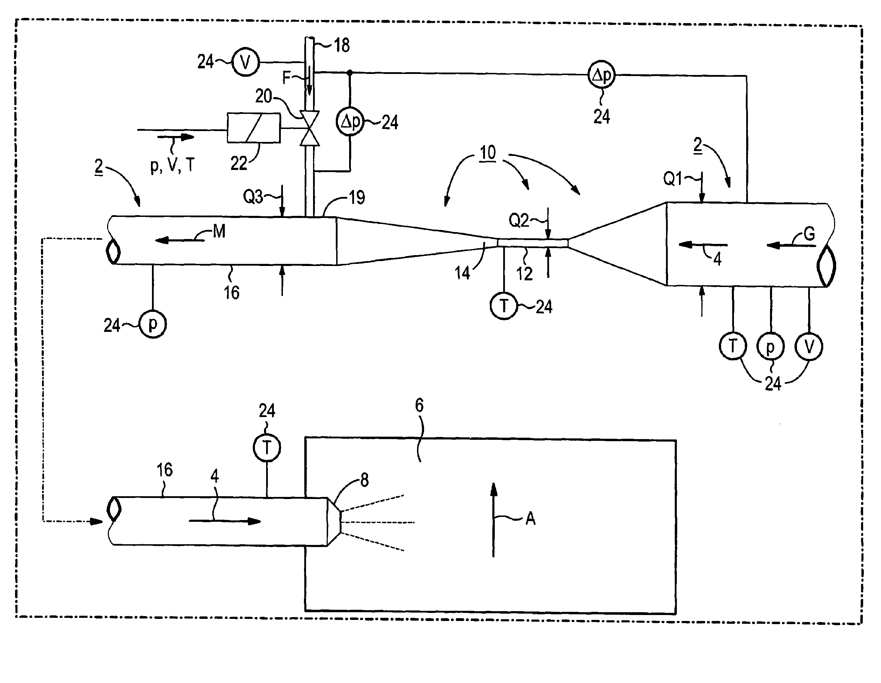

Ein Ausführungsbeispiel der Erfindung wird im Folgenden anhand der einzigen Figur näher erläutert. Diese zeigt in einer stark vereinfachten schematischen Darstellung den prinzipiellen Aufbau der Vorrichtung zum Zerstäuben der Flüssigkeit.

Gemäß der Figur umfasst die Vorrichtung einen im Querschnitt gesehen kreisrunden Strömungskanal 2, der im Betrieb in Strömungsrichtung 4 von einem Trägergas G, insbesondere Druckluft von beispielsweise 6 bar durchströmt wird. Der Strömungskanal 2 mündet mit seinem in Strömungsrichtung 4 gelegenen Ende in eine Abgasleitung 6. Das Ende des Strömungskanals 2 ist dabei als eine nur ansatzweise angedeutete Einstoffdüse 8. Der Strömungskanal 2 ist in einem Teilabschnitt als eine Düse, insbesondere als eine so genannten Lavaldüse 10 ausgebildet. Die Lavaldüse 10 verjüngt sich in Strömungsrichtung 4 von einem maximalen Strömungsquerschnitt Q1 zunächst bis auf einen minimalen Strömungsabschnitt Q2 eines Halsabschnitts 12. Dem Halsabschnitt 12 nachfolgend ist ein Diffusor 14 angeordnet, so dass sich die Querschnittsfläche auf einen Strömungsquerschnitt Q3 vergrößert, der kleiner ist als der Strömungsquerschnitt Q1. An den Diffusor 14 schließt sich ein weiterer Kanalabschnitt 16 an, so dass der Diffusor 14 von der Einstoffdüse 8 beabstandet ist.

Im Ausführungsbeispiel mündet unmittelbar im Anschluss an das in Strömungsrichtung 4 gelegene Ende des Diffusors 14 eine Zuleitung 18 an einer Mündungsstelle 19 in den Kanalabschnitt 16. Über die Zuleitung 18 wird eine Reduktionsmittellösung F in den Strömungskanal 2 eingeleitet und vermischt sich in diesem mit dem Trägergas G und bildet zusammen mit diesem Trägergas G ein Gemisch M. In der Zuleitung 18 ist als Dosiereinrichtung ein Dosierventil 20 vorgesehen, über das der in den Strömungskanal 2 eingeleitete Massenstrom der Reduktionsmittellösung F gesteuert und insbesondere geregelt werden kann. Das Dosierventil 20 steht hierzu mit einer Steuer- oder Regeleinheit 22 in Verbindung.

Die Vorrichtung zur Zerstäubung der Reduktionsmittellösung ist insbesondere für den Einsatz in einem Kraftfahrzeug und dort zur Zerstäubung einer Reduktionsmittellösung in eine Abgasleitung vorgesehen. Als Reduktionsmittellösung F wird insbesondere eine wässrige Harnstofflösung verwendet. Die Abgasleitung wird von einem Abgas A durchströmt. In Strömungsrichtung des Abgases A ist nach der Eindüsung der Reduktionsmittellösung ein Katalysator (nicht dargestellt), insbesondere ein SCR-Katalysator zur Reduzierung der im Abgas enthaltenen Stickoxide vorgesehen. Mit der Vorrichtung ist eine sichere Eindüsung der jeweils aktuell benötigten Menge an Reduktionsmittellösung sichergestellt. Gleichzeitig ist vermieden, dass die Reduktionsmittellösung beispielsweise an der Wand des Strömungskanals 2 entgegen der Strömungsrichtung 4 entlang kriecht. Diese Vorteile beruhen im Wesentlichen darauf, dass durch die spezielle Ausgestaltung der Vorrichtung die Strömung des Trägergases G im Bereich der Lavaldüse 10 von dem Massenstrom der Reduktionsmittellösung F entkoppelt ist.

Beim Betrieb der Vorrichtung werden die Strömungsparameter, insbesondere der Druck, des Trägergases G derart auf die Lavaldüse 10 abgestimmt, dass im Halsabschnitt 12 das Erreichen der Schallgeschwindigkeit sicher erreicht wird. Bei der Konzeption der Lavaldüse 10 wird deren Geometrie dabei derart ausgelegt, dass die kritische Strömung bei einem gewünschten Druck, beispielsweise im Bereich von etwa 6bar, erreicht wird. Im Diffusor 14 erreicht die Trägergasströmung Überschallgeschwindigkeit, bis sie einen Verdichtungsstoß erfährt und mit Unterschallgeschwindigkeit weiterströmt. Im Bereich der Unterschallgeschwindigkeit wird die Reduktionsmittellösung über die Zuleitung 18 zugeleitet. Hierdurch ist ausgeschlossen, dass sich Reduktionsmittellösungsanteile stromaufwärts im Strömungskanal 2 ausbreiten können. Prinzipiell ist ein Zuführen der Reduktionsmittellösung auch unmittelbar im Anschluss an den Halsabschnitt 12 möglich. Wesentlich ist, dass die Zuleitung der Reduktionsmittellösung im Anschluss an den Bereich erfolgt, in dem das Trägergas T auf Schallgeschwindigkeit beschleunigt ist, um die Entkopplung der Strömung der Flüssigkeit von der des Trägergases zu gewährleisten. Dadurch ist mit relativ geringem Aufwand die Ausbildung der kritischen Strömung in der Lavaldüse 10 ermöglicht. Für die Ausbildung und Aufrechterhaltung der kritischen Strömung und der gesamten Funktionsweise ist - im Vergleich zu einer Venturi-Zerstäuberdüse, bei der die Reduktionsmittellösung im Halsabschnitt der Venturi-Düse eingebracht wird - ein wesentlich geringerer Trägergas-Massenstrom ausreichend. Das Strömungsverhalten des Trägergases G durch die Lavaldüse 10 ist auch unabhängig von der eingebrachten Menge der Reduktionsmittellösung. Letztere lässt sich auch sehr einfach variieren, ohne dass die Funktionsweise beeinträchtigt wird. So lässt sich bei der Vorrichtung das Massenstrom-Verhältnis von Reduktionsmittellösung F zu Trägergas G in einem weiten Bereich, beispielsweise von > 1:5 bis < 1:100 einstellen.

Zudem kann in einfacher Weise der Massenstrom des Trägergases G erhöht werden, um eine geeignete Temperierung, insbesondere Kühlung, der Einstoffdüse 8 am Eintrittsort in die Abgasleitung 6 zu erzielen. Diese Kühlung führt zu einer thermischen Entkopplung der Zuleitung 18 von der Abgasleitung 6, d.h. die Rückwirkung des heißen Abgases A auf die Reduktionsmittellösung wird minimiert oder sogar ausgeschlossen. Für die thermische Entkopplung ist zudem zwischen der Mündungsstelle 19 der Zuleitung 18 und der Einstoffdüse 8 eine geeignete Wegstrecke des Kanalabschnitts 16 vorgesehen. Diese Strecke kann ohne Einfluss auf die Funktionsweise sehr groß gewählt werden und liegt bei dem Einsatz der Vorrichtung in einem Kraftfahrzeug beispielsweise in einem Bereich von einigen Zentimetern bis Metern, beispielsweise zwischen 10 Zentimetern und 5 Metern.

Um eine sichere und bedarfsgerechte Zuleitung der Reduktionsmittellösung in die Abgasleitung zu ermöglichen, sind vorzugsweise eine Mehrzahl von einzelnen Messeinrichtungen 24 vorgesehen, die alternativ oder in Kombination zur Erfassung von Strömungswerten der Reduktionsmittellösung F, des Trägergases G und des Gemisches M dienen. Im Ausführungsbeispiel sind die Messeinrichtungen 24 schematisch jeweils durch einen Kreis angedeutet. Die Art der Messeinrichtung wird symbolisiert durch ein V für eine Durchflussmessung, durch ein T für eine Erfassung der Temperatur, durch p für eine Erfassung des Drucks und durch Δp für eine Erfassung eines Differenzdrucks. Die Messeinrichtungen 24 übermitteln dabei vorzugsweise ihre Messergebnisse an die Steuer/Regeleinheit 22. Diese steuert oder regelt in Abhängigkeit der erhaltenen Messwerte die Durchflussmenge der Reduktionsmittellösung durch das Dosierventil 20. Hierzu ist insbesondere auch eine Differenzdruckmessung vorgesehen, die den Druck vor und nach dem Dosierventil 20 erfasst, da die Durchflussmenge durch das Dosierventil 20 maßgebend von dieser Druckdifferenz abhängt.

Neben der Überwachung, Steuerung und insbesondere Regelung der Durchflussmenge der Reduktionsmittellösung F ist auch die Überwachung, Steuerung und insbesondere Regelung des Trägergasstroms vor und durch die Lavaldüse 10 wesentlich. Hierzu werden vorzugsweise sowohl vor der Lavaldüse als auch im Bereich des Halsabschnitts 12 Messwerte erfasst, um hieraus ableiten zu können, ob die Strömung tatsächlich die gewünschte Schallgeschwindigkeit im Halsabschnitt 12 erreicht. Diese dem Trägergasstrom zugeordneten Messwerte werden vorzugsweise in der Steuer- oder Regeleinrichtung 22 verarbeitet. Als Steueroder Regelgröße dient hierzu auch eine im Bereich der Einstoffdüse 8 erfasste Temperatur.

Die Erfassung der Strömungswerte oder Strömungsparameter in den unterschiedlichen Abschnitten des Strömungskanals 2 und der Zuleitung 18 dient allgemein dazu, möglichst viele und genaue Informationen über den tatsächlichen Strömungszustand zu erhalten. Über eine geeignete Steuerung oder Regelung ist sowohl eine sichere und genaue Dosierung als auch die Aufrechterhaltung der kritischen Strömung im Halsabschnitt 12 gewährleistet. Zudem kann eine geeignete Überwachung der Funktionsfähigkeit der Vorrichtung durchgeführt werden, indem beispielsweise bei einer Änderung des Trägergasmassenstroms oder einer kompletten Abschaltung desselben die Druckveränderung insbesondere im Kanalabschnitt 16 überwacht wird. Aus der Druckveränderung können dann Rückschlüsse über evtl. Verstopfungen der Einstoffdüse 8 gewonnen werden.

## Patentansprüche

1. Vorrichtung zum Zerstäuben einer Reduktionsmittellösung (F) in eine Abgasleitung (6) einer Verbrennungsanlage, bei der ein von einem Trägergas (G) in Strömungsrichtung (4) durchströmbarer Strömungskanal (2) zur Abgasleitung (6) vorgesehen ist, der eine Düse (10) mit einem Halsabschnitt (12) mit minimalem Strömungsquerschnitt (Q₂) zur Beschleunigung des Trägergases (G) aufweist, wobei in Strömungsrichtung (4) nach dem Halsabschnitt (12) eine Zuleitung (18) für die Reduktionsmittellösung (F) in den Strömungskanal (2) mündet, an dessen Austrittsende in die Abgasleitung (6) eine Zerstäubereinrichtung (8) für das Gemisch (M) aus Reduktionsmittellösung (F) und Trägergas (G) vorgesehen ist.

2. Vorrichtung nach Anspruch 1, bei der die Düse als Lavaldüse (10) mit einem sich an den Halsabschnitt (12) in Strömungsrichtung (4) anschließenden Diffusor (14) ausgebildet ist, und die Zuleitung (18) in Strömungsrichtung (4) nach dem Diffusor (14) in den Strömungskanal (2) mündet.

3. Vorrichtung nach Anspruch 1 oder 2, bei der die Mündungsstelle (19) der Zuleitung (18) in den Strömungskanal (2) von der Zerstäubereinrichtung (8) beabstandet ist.

4. Vorrichtung nach einem der vorhergehenden Ansprüche, bei der die Zerstäubereinrichtung als Einstoffdüse (8) ausgebildet ist.

5. Vorrichtung nach einem der vorhergehenden Ansprüche, bei der eine Dosiereinrichtung (20) für die Reduktionsmittellösung (F) vorgesehen ist.

6. Vorrichtung nach einem der vorhergehenden Ansprüche, bei der zumindest eine Messeinrichtung (24) zur Erfassung zumindest einer der Strömungswerte Temperatur (T), Druck (P) und Durchflussmenge (V) des Trägergases (G), der Reduktionsmittellösung (F) oder des Gemisches (M) vorgesehen ist.

7. Vorrichtung nach Anspruch 5, bei der die Messeinrichtung (24) zur Erfassung der Strömungswerte im Bereich des Halsabschnitts (12) vorgesehen ist.

8. Vorrichtung nach einem der Ansprüche 5 bis 7, bei der die Messeinrichtung (24) zur Erfassung des Drucks in der Reduktionsmittellösung (P) in der Zuleitung (18) vor und nach der Dosiereinrichtung (20) vorgesehen ist.

9. Vorrichtung nach einem der vorhergehenden Ansprüche, bei der der Massenstrom der Reduktionsmittellösung (F) und/oder der des Trägergases (G) regelbar ist.

10. Verfahren zum Zerstäuben einer Reduktionsmittellösung (F) in eine Abgasleitung (6) eines Kraftfahrzeugs, bei dem die Geschwindigkeit eines Trägergases (G) in einem Strömungskanal (2) zunächst auf zumindest Schallgeschwindigkeit erhöht wird und bei dem anschließend die Reduktionsmittellösung (F) dem Trägergas (G) zur Ausbildung eines Gemisches (M) zugeführt wird, welches in die Abgasleitung (6) zerstäubt wird.

11. Verfahren nach Anspruch 10, bei dem das Trägergas (G) eine Lavaldüse (10) durchströmt und in dieser zunächst auf Überschallgeschwindigkeit beschleunigt wird.

12. Verfahren nach Anspruch 10 oder 11, bei dem das Gemisch (M) vor der Zerstäubung in das Volumen (6) einen Kanalabschnitt (16) des Strömungskanals (2) durchströmt.

13. Verfahren nach einem der Ansprüche 10 bis 12, bei dem zumindest einer der Strömungswerte Temperatur (T), Druck (P) und Durchflussmenge (V) des Trägergases (T), der Reduktionsmittellösung (F) oder des Gemisches (M) erfasst wird.

14. Verfahren nach einem der Ansprüche 10 bis 13, bei dem der Massenstrom der Reduktionsmittellösung und/oder des Trägergases (G) geregelt wird.

## Claims

1. Apparatus for spraying a reducing-agent solution (F) into a waste-gas line (6) of a combustion system, in which leading to the waste-gas line (6) there is provided a flow channel (2) through which a carrier gas (G) can flow in the direction of flow (4) and which has a nozzle (10) with a neck section (12) with a minimum cross section of flow (Q₂) for the acceleration of the carrier gas (G), wherein downstream of the neck section (12) in the direction of flow (4) a feed line (18) for the reducing-agent solution (F) opens into the flow channel (2), provided at the outlet end of which leading into the waste-gas line (6) there is a spray device (8) for the mixture (M) of reducing-agent solution (F) and carrier gas (G).

2. Apparatus according to claim 1, in which the nozzle is formed as a Laval nozzle (10) with a diffuser (14) following on from the neck section (12) in the direction of flow (4), and the feed line (18) opens into the flow channel (2) downstream of the diffuser (14) in the direction of flow (4).

3. Apparatus according to claim 1 or 2, in which the point (19) at which the feed line (18) opens into the flow channel (2) is at a distance from the spray device (8).

4. Apparatus according to one of the preceding claims, in which the spray device is formed as a one-component nozzle (8).

5. Apparatus according to one of the preceding claims, in which a dosing device (20) is provided for the reducing-agent solution (F).

6. Apparatus according to one of the preceding claims, in which at least one measuring device (24) is provided to detect at least one of the flow values temperature (T), pressure (P) and through-flow quantity (V) of the carrier gas (G), the reducing-agent solution (F) or the mixture (M).

7. Apparatus according to claim 5, in which the measuring device (24) is provided to detect the flow values in the region of the neck section (12).

8. Apparatus according to one of claims 5 to 7, in which the measuring device (24) is provided to detect the pressure (P) in the reducing-agent solution in the feed line (18) upstream of and downstream of the dosing device (20).

9. Apparatus according to one of the preceding claims, in which the mass flow of the reducing-agent solution (F) and/or that of the carrier gas (G) can be regulated.

10. Method for spraying a reducing-agent solution (F) into a waste-gas line (6) of a motor vehicle, in which the speed of a carrier gas (G) in a flow channel (2) is first increased to at least sonic speed and in which subsequently the reducing-agent solution (F) is fed to the carrier gas (G) in order to form a mixture (M) which is sprayed into the waste-gas line (6).

11. Method according to claim 10, in which the carrier gas (G) flows through a Laval nozzle (10) and in the latter is accelerated in the first instance to supersonic speed.

12. Method according to claim 10 or 11, in which the mixture (M) flows through a channel section (16) of the flow channel (2) before being sprayed into the volume (6).

13. Method according to one of claims 10 to 12, in which at least one of the flow values temperature (T), pressure (P) and through-flow quantity (V) of the carrier gas (T), the reducing-agent solution (F) or the mixture (M) is detected.

14. Method according to one of claims 10 to 13, in which the mass flow of the reducing-agent solution and/or of the carrier gas (G) is regulated.

## Revendications

1. Dispositif de pulvérisation d'une solution (F) d'agent réducteur dans un conduit (6) de gaz d'échappement d'une installation de combustion, dans lequel il est prévu, pour le conduit (6) de gaz d'échappement, un canal (2) d'écoulement, dans lequel un gaz (G) porteur peut passer dans le sens (4) d'écoulement et qui a une buse (10) ayant une partie (12) de col de section (Q₂) transversale d'écoulement minimum pour l'accélération du gaz (G) porteur, dans lequel, en aval de la partie (12) de col dans le sens (4) d'écoulement, un conduit (18) d'apport de la solution (F) d'agent réducteur débouche dans le canal (2) d'écoulement, à l'extrémité de sortie duquel est prévu, dans le conduit (6) des gaz d'échappement, un dispositif (8) de pulvérisation du mélange (M) de solution (F) d'agent réducteur et de gaz (G) porteur.

2. Dispositif suivant la revendication 1, dans lequel la buse est constituée sous la forme d'une buse (10) de Laval ayant un diffuseur (14) se raccordant à la partie (12) de col dans le sens (4) d'écoulement et le conduit (18) d'apport débouche dans le canal (2) d'écoulement en aval du diffuseur (14) dans le sens (4) d'écoulement.

3. Dispositif suivant la revendication 1 ou 2, dans lequel le point (19) où le conduit (18) d'apport débouche dans le canal (2) d'écoulement est à distance du dispositif (8) de pulvérisation.

4. Dispositif suivant l'une des revendications précédentes, dans lequel le dispositif de pulvérisation est constitué sous la forme d'une buse (8) à une substance.

5. Dispositif suivant l'une des revendications précédentes, dans lequel il est prévu un dispositif (20) d'addition dosée pour la solution (F) d'agent réducteur.

6. Dispositif suivant l'une des revendications précédentes, dans lequel il est prévu au moins un dispositif (24) de mesure pour la détection d'au moins l'une des valeurs d'écoulement, température (T), pression (P) et débit (V) du gaz (G) porteur, de la solution (F) d'agent réducteur ou du mélange (M).

7. Dispositif suivant la revendication 5, dans lequel le dispositif (4) de mesure est prévu pour la détection des valeurs d'écoulement dans la zone de la partie (12) de col.

8. Dispositif suivant l'une des revendications 5 à 7, dans lequel le dispositif (24) de mesure est prévu pour la détection de la pression (P) de la solution d'agent réducteur dans le conduit (18) d'apport en amont et en aval du dispositif (20) d'addition dosée.

9. Dispositif suivant l'une des revendications précédentes, dans lequel le courant massique de la solution (F) d'agent réducteur et/ou du gaz (G) porteur peut être réglé.

10. Procédé de pulvérisation d'une solution (F) d'agent réducteur dans un conduit (6) de gaz d'échappement d'un véhicule automobile, dans lequel on augmente d'abord la vitesse d'un gaz (G) porteur dans un canal (2) d'écoulement jusqu'à au moins la vitesse du son et dans lequel, ensuite, on apporte la solution (F) d'agent réducteur au gaz (G) porteur pour la formation d'un mélange (M) qui est pulvérisé dans le conduit (6) de gaz d'échappement.

11. Procédé suivant la revendication 10, dans lequel on fait passer le gaz (G) porteur dans une buse (10) de Laval et on l'accélère d'abord jusqu'à une vitesse supersonique.

12. Procédé suivant la revendication 10 ou 11, dans lequel on fait passer le mélange (M) avant la pulvérisation dans le volume (6) d'une partie (16) du canal (2) d'écoulement.

13. Dispositif suivant l'une des revendications 10 à 12, dans lequel on détecte au moins l'une des valeurs d'écoulement, température (T), pression (P) et débit (V) du gaz (T) porteur, de la solution (F) d'agent réducteur ou du mélange (M).

14. Dispositif suivant l'une des revendications 10 à 13, dans lequel on règle le courant massique de la solution d'agent réducteur et/ou du gaz (G) porteur.
